# EUROPÄISCHE PATENTSCHRIFT

(11) **EP 1 356 885 B1**
(45) Veröffentlichungstag und Bekanntmachung des Hinweises auf die Patenterteilung: **03.08.2005**
(21) Anmeldenummer: 03008321.6
(22) Anmeldetag: 10.04.2003
(51) Int. Cl.: B23C 3/06, B23C 5/22, B23C 5/08, B23C 5/24

(54) **Scheibenfräser und Schneidplatte**
Disc-type cutter and cutting insert for a disc-type cutter
Fraise à disque et plaquette de coupe pour une fraise à disque

(30) Priorität: 25.04.2002 DE 10218630
(43) Veröffentlichungstag der Anmeldung: 29.10.2003
(73) Patentinhaber: Sandvik Intellectual Property HB, 811 81 Sandviken (SE)
(72) Erfinder: Wermeister, Günter, 40667 Meerbusch (DE); Lohr, Rudolf, 41462 Neuss (DE); Knecht, Stefan, 44143 Dortmund (DE)
(74) Vertreter: Weber, Dieter, Dr.

(56) Entgegenhaltungen:
- EP-A- 0 873 808
- DE-A- 10 017 645
- DE-U- 20 103 921
- FR-A- 2 431 897
- FR-A- 2 615 769
- US-A- 3 792 517
- US-A- 4 867 616

## Beschreibung

Die vorliegende Erfindung betrifft einen Scheibenfräser bzw. ein Scheibenfräsersegment, insbesondere für das Fräsen von Kurbelwellen oder Nockenwellen gemäß dem Oberbegriff des Anspruchs 7, und eine hierfür zu verwendende Schneidplatte gemäß dem Oberbegriff des Anspruchs 1. Ein entsprechender Scheibenfräser ist beispielsweise aus der DE 100 17 645 bekannt. Die Merkmale des Oberbegriffs des Anspruchs 1 lassen sich mit gewissen Abstrichen auch auf einen aus der FR 2 431 897 bekannten Schneideinsatz lesen.

Fräsen ist ein spanabhebendes Bearbeitungsverfahren, bei dem das Werkzeug rotiert, wobei Relativbewegungen zwischen Werkstück und Werkzeug senkrecht zu dessen Rotationsachse stattfinden. Das Werkzeug ist mit Schneiden ausgestattet, die bei der Drehung des Werkzeuges um die Werkzeugmittelachse die Schnittbewegung erzeugen. Die Vorschubbewegungen können in verschiedenen Richtungen erfolgen. Sie können sowohl vom Werkzeug als auch vom Werkstück oder sogar von beiden ausgeführt werden. Im Unterschied zum Drehen oder Bohren sind die Schneiden nicht ständig im Eingriff mit dem Werkstück. Vielmehr werden sie nach einem Schnitt am Werkstück zum Anschnittpunkt zurückgeführt. Dies hat den Vorteil, daß die Schneiden abkühlen können und die Späne aus den Spankammern abgegeben werden.

Beim Fräsen werden zumeist Werkzeuge verwendet, auf denen Schneidplatten befestigt sind, die die entsprechenden Schneiden aufweisen. Derartige Schneidplatten, die auch Schneideinsätze genannt werden, sind im Prinzip seit langem bekannt.

Unter Kurbelwellen werden ganz allgemein Maschinenelemente verstanden, mit denen lineare Bewegungen in rotierende oder rotierende in lineare Bewegungen umgewandelt werden. Bei der serienmäßigen Herstellung von Kurbelwellen wird meist auf geschmiedete oder gegossene Kurbelwellen zurückgegriffen. Die moderne Motorenkonstruktion stellt immer höhere Forderungen an die Leistungen und die Laufruhe von Kurbelwellen. Zudem sollen die Kosten gesenkt werden. Gefragt sind im wesentlichen eine höhere Motorleistung bei gleichem Hub, ein verbesserter Wirkungsgrad, d.h. geringere Reibungsverluste, und ein geringeres Gewicht. Dies erfordert zwangsläufig eine Optimierung aller Konstruktionsparameter, wie z. B. der Abmessungen, der Materialeigenschaften und der Oberflächenbehandlungen, insbesondere der geringen Oberflächentoleranzen. Gleichzeitig wird zur Senkung der Fertigungskosten bei der herstellenden Bearbeitung von Kurbelwellen immer häufiger das Schleifen durch Zerspanung mit definierter Schneide, wie z. B. Drehen, Drehräumen oder Fräsen ersetzt, sofern dies möglich ist.

Insbesondere für das Bearbeiten der Hublager der Kurbelwellen hat sich in letzter Zeit das Außenfräsen im Pendelhubverfahren durchgesetzt. Hierbei wird zwischen Schrupp- und Schlichtfräsen unterschieden und mehrheitlich werden Scheibenfräser mit einem Durchmesser von 700 mm und mit bis zu 270 Wendeschneidplatten eingesetzt.

Beim Schlichtfräsen sind die Fräser in der Regel mit Durchmesserschneiden und Einstichschneiden bestückt. Die Durchmesserschneiden erzeugen den Lagerdurchmesser, der in einer späteren Operation noch fertig geschliffen wird, und die Einstichschneiden erzeugen die fertige Lagerbreite, d. h. die gegenüberliegenden Flächen der Anlaufbunde (auch Ölbunde genannt) für die Pleuel, und den als Schleifauslauf dienenden Einstich im Übergangsbereich zwischen Lagerzapfen und den erwähnten Anlaufbunden am radial inneren Abschnitt der Kurbelwangen.

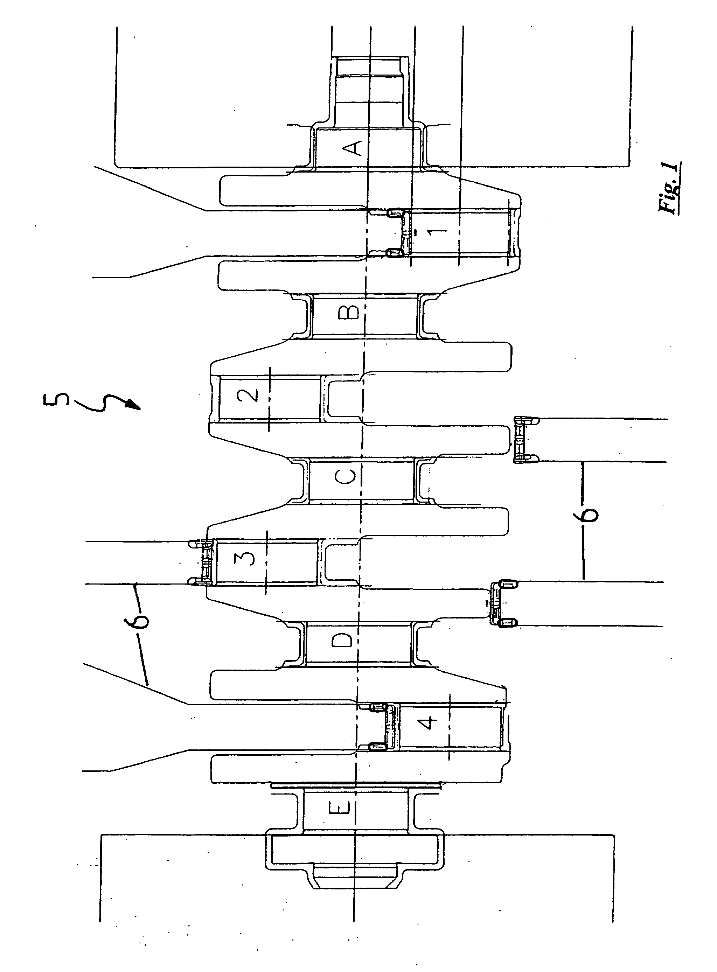

In Figur 1 ist beispielhaft eine Kurbelwelle 5 im aufgespannten Zustand zu sehen. Die Kurbelwelle 5 hat Hauptlager A, B, C, D und E sowie Hublager 1, 2, 3, 4. Die einzelnen Hublager werden im Pendelhubverfahren mittels der Scheibenfräser 6 bearbeitet. Beim Pendelhubverfahren dreht sich während der Bearbeitung die Kurbelwelle um ihre Längsachse. Die mit der gewünschten Schnittgeschwindigkeit rotierenden Scheibenfräser 6 werden der entsprechenden Bewegung der Hublager 1, 2, 3, 4 nachgeführt. Die Bearbeitung der Hublager 1, 2, 3, 4 der Kurbelwelle 5 ist im wesentlichen jeweils nach einer vollen Umdrehung der Kurbelwelle 5 beendet. Auch die Umfangsflächen der Kurbelwangen können bei der gleichen Operation bearbeitet werden.

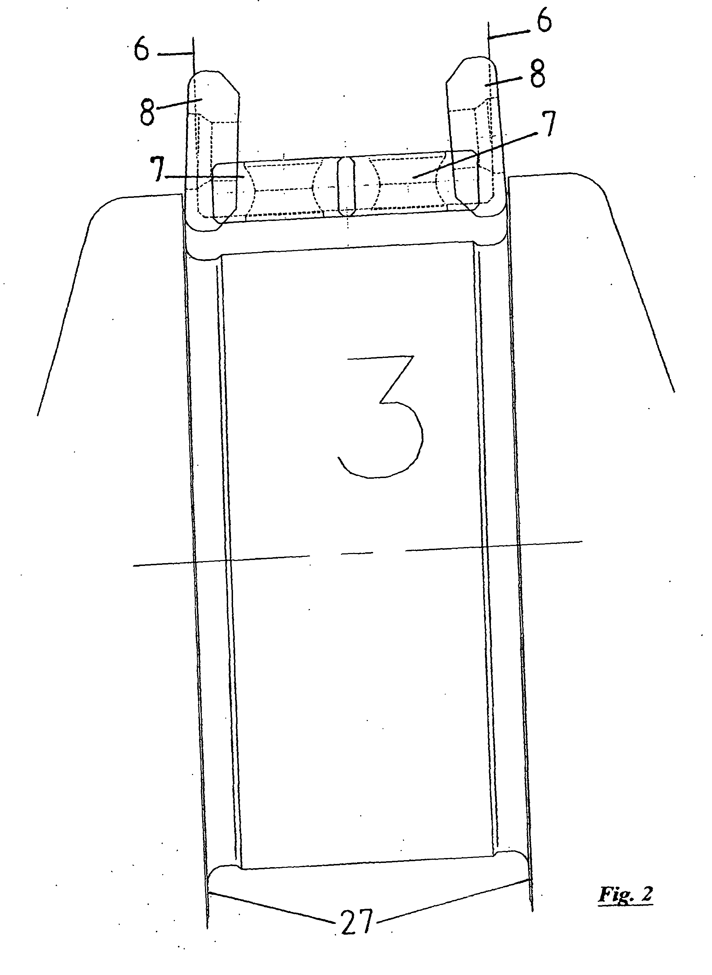

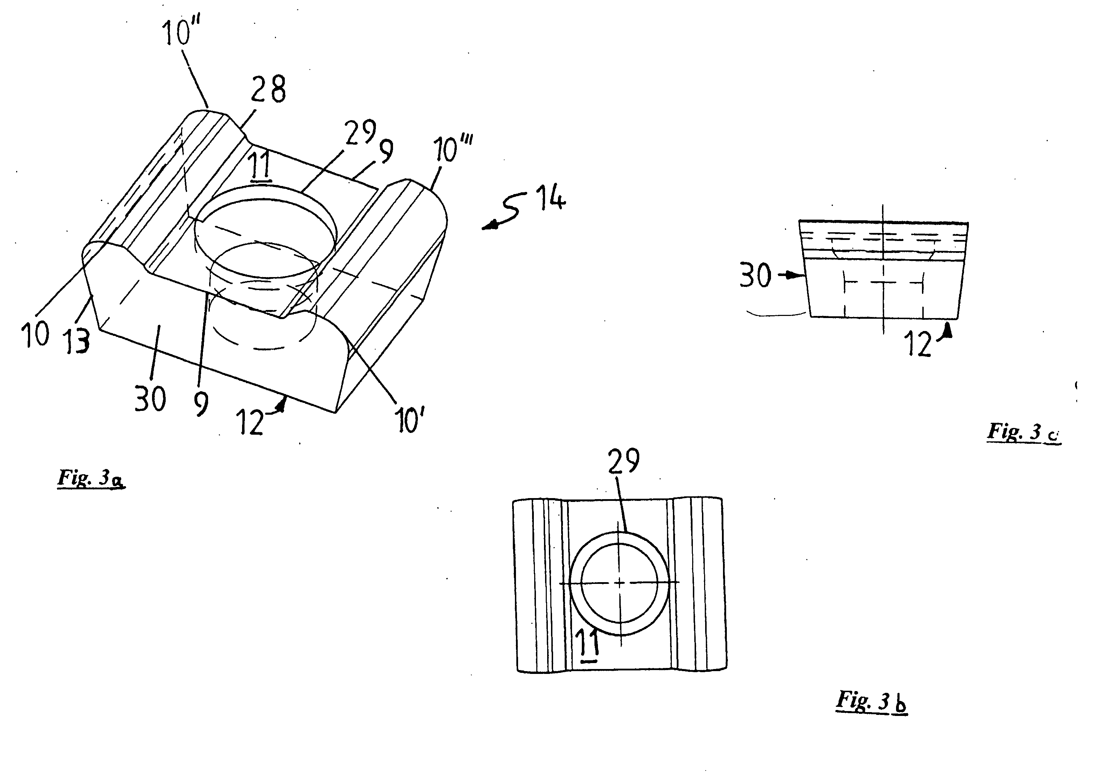

In Figur 2 ist die Bearbeitung des Hublagers 3 aus Figur 1 vergrößert dargestellt. Der Scheibenfräser 6 ist hier mit Durchmesserschneiden 7, die kreuzverzahnt angeordnet sind, und Einstichschneiden 8 ausgestattet. Die Durchmesserschneiden 7 sind tangential angeordnet, während die Einstichschneiden 8 lateral angeordnet sind. Die bekannten lateral angeordneten Einstichschneiden sind als Wendeschneidplatte mit vier Schneidkanten ausgebildet, die abhängig von der Einbaurichtung mit dem Werkstück in Eingriff treten.

Insbesondere bei der axialen Führung von Pleueln durch Kurbelwellen werden mittlerweile hohe Anforderungen auch an die Oberfläche der Anlaufbunde bzw. Ölbunde 27 der Kurbelwelle 5 gestellt, so daß diese mit besonderer Sorgfalt hergestellt werden müssen. Derzeitige Scheibenfräser haben eine Planlauftoleranz von bestenfalls etwa 20 um, so daß die Anlaufbunde 27 meist nicht allein mittels fräsender Bearbeitung hergestellt werden können, sondern nachträglich noch geschliffen oder feingedreht werden müssen.

In der WO 01/76796 A1 ist ein Schneideinsatz für Nockenwellenfräser vorgeschlagen worden. Bei dem Nockenwellenfräser weist die Schneidkante des Schneideinsatzes mehrere Schneidkantenabschnitte auf mit einem ersten, gerade verlaufenden Abschnitt, einem zweiten, gerade verlaufenden Abschnitt, der an den ersten Abschnitt anschließt und mit diesem einen Winkel zwischen 90° und weniger als 180° einschließt, und mit einem dritten Schneidkantenabschnitt, der konvex gekrümmt verläuft. Der konvexe Abschnitt bildet dabei die Einstichschneide. Dieser Nockenwellenfräser hat jedoch ebenfalls Planlauftoleranzen in der Größenordnung von 20 µm.

Es ist daher die Aufgabe der vorliegenden Erfindung, eine Schneidplatte sowie einen Fräser zur Verfügung zu stellen, der den zunehmenden Anforderungen der Motorenkonstruktion gewachsen ist und mit dem insbesondere eine deutlich verringerte Planlauftoleranz erreichbar ist, so daß auch die Oberflächen der Anlaufbunde von Kurbelwellen in einem Fräsvorgang ohne Nachschleifen bearbeitet werden können. Zudem ist es Aufgabe der vorliegenden Erfindung eine Schneidplatte zur Verfügung zu stellen, die für diesen Zweck kostengünstig einsetzbar ist.

Die eingangs beschriebene Aufgabe wird durch eine Schneidplatte für Scheibenfräser, insbesondere für das Fräsen von Kurbelwellen, gelöst mit einer oberen und einer unteren Fläche sowie umlaufenden Seitenflächen, welche die oberen und unteren Flächen miteinander verbinden, wobei die obere Fläche mindestens im Bereich zweier Ecken wulstartige Erhöhungen bzw. Vorsprünge aufweist, die sich vorzugsweise über die gesamte Länge einer Seite der Schneidplatte erstrecken, so daß in einer Draufsicht auf eine durch mindestens eine der Seitenflächen gebildete Spanfläche die Kante, welche den Übergang von der oberen Fläche zu der Spanfläche definiert, im Bereich der beiden Enden dieser Kante, jeweils einen gegenüber dem mittleren Kantenabschnitt vorspringenden Abschnitt hat. Das Kantenprofil der Spanfläche besteht also aus einem nicht näher zu definierenden, im allgemeinen jedoch geraden mittleren Abschnitt und zwei sich im Profil vorwölbenden Endabschnitten, welche die eigentlichen Schneidkanten bilden.

Dabei ist die Schneidplatte für einen geneigten Einbau vorgesehen, so daß je nach Neigungsrichtung im wesentlichen nur ein erhöhter bzw. vorspringender, Endabschnitt mit dem Werkstück in Eingriff tritt, der als Schneidkante dient. Durch diese Maßnahme erhält man an einer der als Spanflächen dienenden Seitenflächen des Schneideinsatzes jeweils zwei nutzbare Schneidkanten, und zwar eine linke und eine rechte. Die Schneidplatte kann, wenn die mit dem Werkstück in Eingriff getretene Schneidkante abgenutzt ist, in im wesentlichen derselben Orientierung in einer anderen Einbaulage, das heißt auf der in Bezug auf die vorherige Einbaulage gegenüberliegenden Seite des Scheibenfräsers erneut verwendet werden.

Wenn die der beschriebenen Seite diametral gegenüberliegende Seite des Schneideinsatzes ebenfalls als Spanfläche verwendet, also an deren Übergang zur oberen Fläche ebenfalls je eine Schneidkante an den vorspringenden Endabschnitten vorgesehen wird, verdoppelt sich die Zahl der nutzbaren Schneidkanten auf 4.

Das Profil des erhöhten bzw. vorspringenden Abschnittes kann entsprechend dem gewünschten Profil des als Schleifauslauf dienenden Einstichs im Übergangsbereich zwischen Lagerzapfen und Kurbelwange einer Kurbelwelle gestaltet werden.

Mit Vorteil verlaufen daher die erhöhten Abschnitte konvex gekrümmt, wobei der gekrümmte Abschnitt auch aus geraden, zueinander abgewinkelten Teilstücken bestehen kann, wobei sich der konvex gekrümmte Abschnitt über einen Winkelbereich von mehr als 90°, vorzugsweise über einen Winkelbereich von mehr als 95° und besonders bevorzugt über einen Winkelbereich von etwa 110° oder mehr erstreckt. Die konvexe Hauptschneide, die im Bereich einer Schneidecke im wesentlichen durch den Übergang zwischen einer Seitenfläche und der wulstartigen Erhöhung auf der oberen Fläche gebildet wird, läuft in eine Nebenschneidkante aus, die zwischen den an dieser Schneidecke angrenzenden Seitenflächen gebildet wird, von denen eine die Spanfläche und die andere die Nebenfreifläche definiert.
Zum mittleren Abschnitt der Kante zwischen oberer Fläche und Seitenfläche bzw. Spanfläche läuft die Spanfläche vorzugsweise in einem stumpfen Übergangswinkel aus, so dass der zur Mitte hin liegende Abschnitt der Schneidkante, soweit er noch mit dem Werkstück in Eingriff tritt, unter einem Winkel von deutlich weniger als 90° gegenüber der durch die obere oder untere Fläche definierten Ebene geneigt verläuft. Dies dient dazu, Spannungen und Belastungen sowohl des Schneideinsatzes selbst als auch des Überganges der eigentlichen Lagerfläche des Pleuellagers zum Schleifauslauf gering zu halten.

Besonders bevorzugt hat die Schneidplatte einen im wesentlichen quaderförmigen Aufbau und besitzt vier Schneidkanten jeweils am Übergang zweier Seitenflächen zur oberen Flächen bzw, den dort vorgesehenen, wulstartigen Vorsprüngen, sowie vorzugsweise eine im wesentlichen ebene untere Fläche, die als Auflagefläche dient und aufgrund ihrer ebenen Geometrie einfach und präzise geschliffen werden kann.

Durch die Möglichkeit des verkippten Einbaus der Schneidplatte bilden die Kante, die die Spanfläche und die obere Fläche trennt, und die Kante, die die der Spanfläche gegenüberliegende Seitenfläche von der oberen Fläche trennt, jeweils zwei Schneidkanten, von denen immer nur eine mit dem Werkstück in Kontakt tritt. Daher werden insgesamt vier Schneidkanten, zwei rechte und zwei linke, gebildet, wobei jeweils drei der Schneidkanten durch die entsprechende Einbaulage automatisch innerhalb des Schneidprofils liegen und damit gegen unbeabsichtigte Beschädigung, z. B. durch Spanschlag, geschützt sind. Das genaue Profil des konvex gekrümmten Abschnittes ist sowohl an das gewünschte Profil des Einstiches als auch an den gewünschten Neigungswinkel der Schneidplatte angepaßt.

Es können beispielsweise die gekrümmten Schneidkantenabschnitte an ihren dem mittleren Kantenabschnitt zugewandten Seiten einen gerade verlaufenden Abschnitt aufweisen, der mit der durch die obere Fläche gebildeten Ebene einen Winkel von mehr als 90° und weniger als 180°, vorzugsweise von mehr als 110° und weniger als 160°, besonders bevorzugt mehr als 130° und weniger als 150° einschließt. Durch diese Maßnahme wird der Übergang zwischen dem Hubzapfen und dem Einstich derart gebildet, daß die Gefahr von Beschädigungen reduziert wird.

Um eine möglichst gute Ausnutzung der Wendeschneidplatte zu ermöglichen, sind die von den erhöhten Abschnitten gebildeten Schneidkanten mit Vorteil spiegelsymmetrisch zueinander bezüglich einer senkrecht zu der Spanfläche und senkrecht zu der unteren Fläche verlaufenden Ebene ausgebildet.
Bei einer besonders bevorzugten Ausführungsform bilden die äußeren Begrenzungen der erhöhten Abschnitte Nebenschneidkanten. Mit Hilfe der Nebenschneidkanten können die Innenflächen der Kurbelwangen bzw. die Anlaufbunde bearbeitet werden.

Mit Vorteil schließen die Nebenschneidkanten in einer Draufsicht auf die Spanfläche mit der durch die untere Fläche definierten Ebene einen Winkel ein, der größer als 95°, vorzugsweise größer als 98° und kleiner als 110° und besonders bevorzugt etwa 100° ist.

Hinsichtlich des Scheibenfräsers wird die eingangs erwähnte Aufgabe durch einen Scheibenfräser gelöst mit mindestens einem Sitz für die Aufnahme einer tangential am Scheibenfräser anzuordnenden Schneidplatte, wobei die radiale Auflagefläche des Sitzes relativ zur Achse des Scheibenfräsers oder des Scheibenfräsersegmentes geneigt ist. Zur Erzielung des notwendigen Freiwinkels ist diese im wesentlichen radiale Sitzfläche auch in Umfangsrichtung, d. h. relativ zur Umfangsfläche, leicht geneigt.

Durch diese Maßnahme wird sichergestellt, daß eine Schneidplatte derart im wesentlichen tangential angeordnet werden kann, daß nur eine der Schneidkanten mit dem Werkstück in Eingriff tritt. Die tangentiale Anordnung sorgt für eine bessere Zugänglichkeit der Schneidplatte beim Plattenwechsel, da die Befestigungsbohrungen dementsprechend radial verlaufen (abgesehen von dem leichten Kippwinkel) und die Befestigungsschrauben somit auf der Umfangsfläche des Fräsers zugänglich sind. Die gekippte Anordnung der Schneidplatte ermöglicht insbesondere bei Scheibenfräsern mit Durchmesserschneiden und Einstichschneiden, bei denen ohnehin ein Teil der Schneidkante der Einstichschneide aufgrund der vorhandenen Durchmesserschneiden nicht mit dem Werkstück in Eingriff gerät, Einstichschneiden mit mehreren Erhöhungen, wie sie oben beschrieben wurden, zu verwenden. Durch den geneigten Einbau wird erreicht, daß ein eine Schneidkante bildender erhöhter Abschnitt hinter der Kontur der Durchmesserschneiden verschwindet, so daß diese Schneidkante nicht mit dem Werkstück in Eingriff tritt.

Der Sitz, genauer gesagt die Auflagefläche des Sitzes, ist vorzugsweise überwiegend in axialer Richtung geneigt, wobei der Neigungswinkel des Sitzes möglichst kleiner als 15°, vorzugsweise zwischen 4° und 10°, besonders bevorzugt zwischen 6° und 8° beträgt. In Umfangsrichtung wird die Auflagefläche des Sitzes um den gewünschten Umfangsfreiwinkel, also z. B. um etwa 3° oder auch etwas mehr geneigt.

Mit Vorteil sind die geneigten Plattensitze in Umfangsrichtung abwechselnd auf der rechten und der linken Seite der Umfangsfläche des Scheibenfräsers angeordnet. Werden zusätzlich Durchmesserschneiden auf dem Scheibenfräser montiert, so ist es durch geeignete Wahl der Längenverhältnisse durch diese kreuzverzahnte Anordnung möglich, den kompletten Hubzapfen einschließlich beider benachbarten Anlaufbunde in einem einzigen Arbeitsgang zu fertigen.

Um die Planlauftoleranz zu vermindern, wird zumindest einem Plattensitz mit Vorteil eine Einstellvorrichtung für die axiale Ausrichtung einer in dem Sitz aufgenommenen Schneidplatte zugeordnet. Diese Einstellvorrichtung erlaubt die unabhängige axiale Einstellung der Schneidplatte, so daß die Planlauftoleranz deutlich verringert werden kann.

In einer besonders bevorzugten Ausführungsform weist die Einstellvorrichtung einen Keil auf, dessen eine Keilfläche als axiale Anlagefläche des Plattensitzes dient wobei der Keil in radialer Richtung verschiebbar und einstellbar derart angeordnet ist, daß seine axiale Sitzfläche sich bei einer radialen Verschiebung des Keiles gleichzeitig auch in axialer Richtung verschiebt, und zwar in einem durch den Keilwinkel und einen Wirkwinkel definierten Untersetzungsverhältnis gegenüber dem radialen Stellweg. Durch die Bewegung des Keiles wird dann eine in dem Sitz aufgenommene Schneidplatte in axialer Richtung in dem Sitz verschoben. Es versteht sich, daß der Keil durch jede keil- oder rampenartige Fläche gebildet werden kann.

Der Keil hat den Vorteil, daß die Position der Schneidplatte auf dem Plattensitz sehr genau eingestellt werden kann.

Es hat sich gezeigt, daß der Keil mit Vorteil einen Wirkwinkel von weniger als 15°, vorzugsweise von weniger als 10°, besonders bevorzugt zwischen 5° und 8° aufweist.

In einer weiteren besonders bevorzugten Ausführungsform ist vorgesehen, daß die Einstellvorrichtung für den Keil eine Differentialschraube mit zwei Gewinden aufweist. Mit Hilfe von Differentialschrauben lassen sich äußerst genaue Einstellungen vornehmen. Der Keil weist ein einem der Gewinde der Schraube entsprechendes Innengewinde auf. Das andere Gewinde der Differentialschraube wird in eine entsprechende Bohrung in dem Scheibenfräsersegment neben dem Plattensitz eingeschraubt.

Mit Vorteil weist die Differentialschraube zwei Gewinde, vorzugsweise zwei rechtsgängige Gewinde, mit einer Steigungsdifferenz auf, die vorzugsweise kleiner als 1 mm, besonders bevorzugt zwischen 0,1 und 0,4 mm beträgt.

Zweckmäßigerweise weist der Plattensitz neben einer radialen Anschlagsfläche, die durch die Auflagefläche des Plattensitzes gebildet wird, und neben der erwähnten, vorzugsweise einstellbaren axialen Anlagefläche auch eine tangentiale Anschlagfläche auf, und eine in dem Sitz befestigte Schneidplatte ist zumindest gegen die axiale Anschlagsfläche vorgespannt.

Die Tatsache, dass die Schneidplatte allein durch ihre Befestigungsschraube unter Vorspannung gegen eine axiale Anschlagfläche gedrückt wird, verhindert nicht, dass die Schneidplatte gleichwohl mittels der Einstelleinrichtung zusätzlich in axialer Richtung eingestellt werden kann, da die Fertigung der Schneidplatten und der Plattensitze im Scheibenfräser bzw. einem Scheibenfräsersegment bereits relativ genau ist und der zur Einstellung der geringen Planlauftoleranzen erforderliche axiale Stellweg nur in der Größenordnung von 10 bis 50 µm liegt. Die Befestigungsvorrichtung für die Fixierung der Schneidplatte in ihrem Sitz erlaubt durch elastisches Nachgeben noch eine entsprechend begrenzte Bewegung der Schneidplatte in axialer Richtung durch den Einstellkeil. Vorzugsweise wird eine Befestigungsschraube verwendet, deren elastische Eigenschaften diese begrenzte Bewegung erlauben.

Weitere Vorteile, Merkmale und Anwendungsmöglichkeiten werden deutlich anhand der folgenden Beschreibung bevorzugter Ausführungsformen sowie der dazugehörigen Figuren. Es zeigen:
- Figur 1: eine Darstellung der Bearbeitung einer Kurbelwelle gemäß des Standes der Technik,
- Figur 2: eine Detailvergrößerung von Figur 1,
- Figuren 3a bis 3d: verschiedene Ansichten des erfindungsgemäßen Schneideinsatzes,
- Figur 3e: eine Seitenansicht einer abgewandelten Ausführungsform eines erfindungsgemäßen Schneideinsatzes,
- Figur 4a und 4b: zwei Ansichten einer ersten Ausführungsform eines erfindungsgemäßen Scheibenfräsersegments mit eingesetzten erfindungsgemäßen Schneidplatten und Durchmesserschneiden,
- Figur 5a und 5b: zwei Ansichten einer zweiten erfindungsgemäßen Ausführungsform eines Scheibenfräsersegments mit eingesetzten erfindungsgemäßen Schneidplatten,
- Figur 6 und 7: Ansichten des erfindungsgemäßen Scheibenfräsers mit montierten Scheibenfräsersegmenten,
- Figur 8: eine Schnittansicht durch eine Schneidplatte mit Keil,
- Figuren 9a bis 9f: verschiedene Ansichten der Differentialschraube und des Verstellkeils und
- Figur 10: eine Darstellung der Funktionsweise der erfindungsgemäßen Einstellvorrichtung.

Die Figuren 1 und 2 zeigen das bislang von der Anmelderin verwendete Verfahren zur Bearbeitung von Kurbelwellen, das bereits oben beschrieben worden ist.

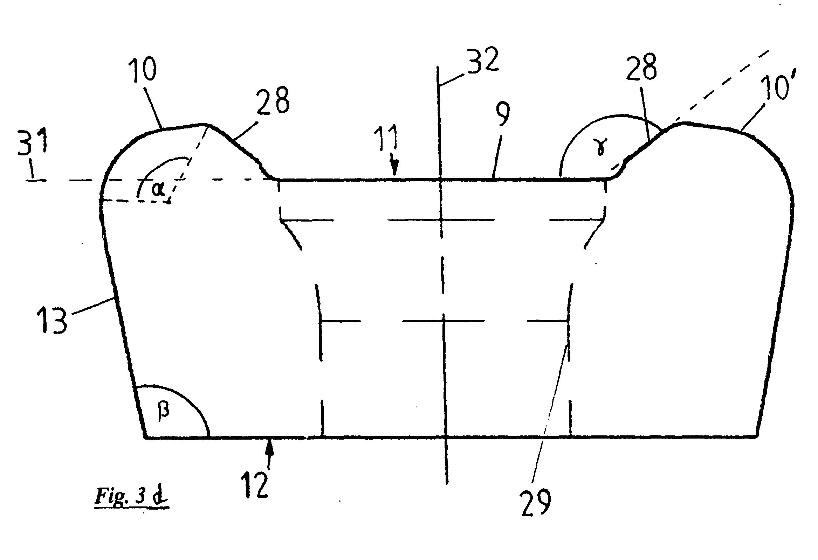

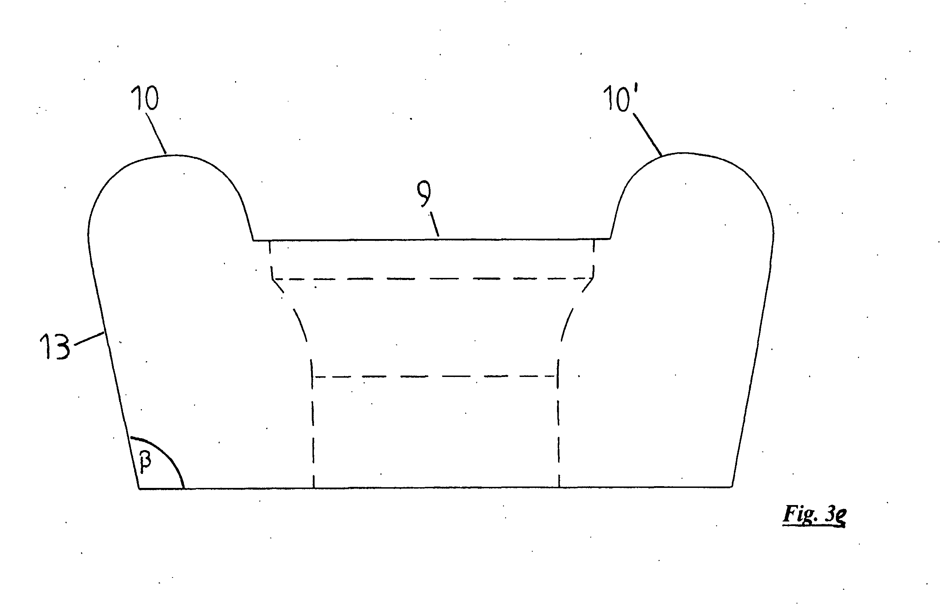

In den Figuren 3a bis 3d ist der erfindungsgemäße Schneideinsatz in verschiedenen Ansichten gezeigt. In der perspektivischen Ansicht der Figur 3a ist deutlich der quaderförmige Aufbau des Schneideinsatzes bzw. der Schneidplatte zu erkennen. Die Schneidplatte 14 hat insgesamt vier Schneidkanten 10, 10', 10", 10"'.

Wie insbesondere in Figur 3d, die eine seitliche Ansicht auf die Spanfläche 30 zeigt, deutlich zu erkennen ist, setzt sich die Kante, welche die obere Fläche 11 von der Spanfläche 30 trennt, aus einem mittleren Abschnitt 9 und gegenüber dem mittleren Abschnitt erhöhten Abschnitten 10, 10' zusammen, welche die eigentlichen Schneidkanten definieren.

In der gezeigten Ausführungsform ist der mittlere Abschnitt im wesentlichen gerade verlaufend ausgebildet. Des weiteren schließt sich beidseitig an den gerade verlaufenden mittleren Abschnitt 9 ein ebenfalls gerader Abschnitt 28 an, der mit dem mittleren Abschnitt 9 einen Winkel γ von etwa 140° einschließt. An diese Abschnitte 28 schließen sich wiederum die erhöhten Abschnitte 10, 10' an, die im wesentlichen konvex gekrümmt verlaufen, wobei sich der gekrümmte Bereich über einen Winkelbereich α von etwa 110° erstreckt. Die beiden gekrümmten Bereiche 10 und 10' gehen in die Nebenschneidkanten 13 über, die mit der durch die untere Fläche 12 definierten Ebene einen Winkel β von etwa 101° einschließen. Es versteht sich aber, daß die sich an den mittleren Abschnitt 9 anschließenden geraden Abschnitte 28 nicht unbedingt notwendig sind. In Figur 3e ist daher eine andere Ausführungsform des Schneideinsatzes gezeigt, bei dem die konvex gekrümmten Abschnitte sich über einen deutlich größeren Winkelbereich α erstrecken, wobei auf die geraden Abschnitte 28 verzichtet wurde. Die genaue Ausgestaltung der erhöhten Abschnitte 10, 10', 28 richtet sich in erster Linie nach dem gewünschten Einstichprofil.

Deutlich zu erkennen ist in Figur 3d, daß der Schneideinsatz im Querschnitt an seinen beiden in der Figur sichtbaren Schneidecken zwei erhöhte Bereiche 10, 28 bzw. 10', 28 aufweist, die deutlich über die verbleibende obere Fläche 11 hinaus ragen, wie durch die Höhenlinie 31 verdeutlicht wird. Der Schneideinsatz ist in Bezug auf die Symmetrielinie 32 spiegelsymmetrisch.

In etwa in der Mitte der oberen und der unteren Fläche weist der Schneideinsatz 14 eine Befestigungsbohrung 29 auf. Der Schneideinsatz 14 ist dafür vorgesehen, in tangentialer Anordnung an einem Scheibenfräser befestigt zu werden. In diesem Fall ist die Fläche 30 die Spanfläche, während die von den wulstartigen Erhöhungen gebildeten Teile der oberen Fläche 11 die Freiflächen darstellen.

Figur 3c zeigt eine seitliche Ansicht. Bei der gezeigten Ausführungsform sind die Spanwinkel zur Reduzierung der Schnittkräfte positiv gestaltet, es versteht sich jedoch, daß auch eine negative Ausführung möglich ist.

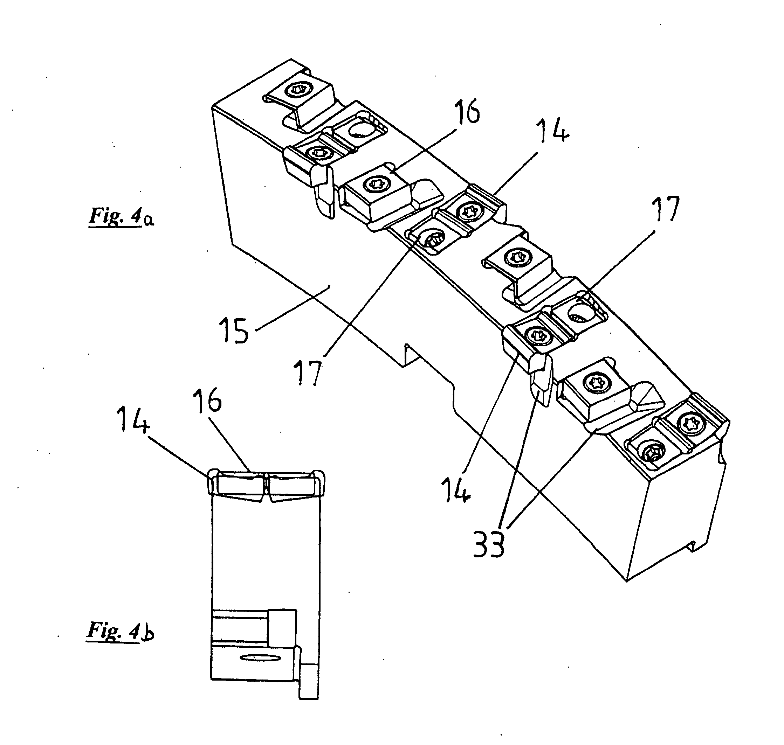

In den Figuren 4a und 4b ist ein Scheibenfräsersegment 15 in einer perspektivischen und in einer Schnittansicht gezeigt. Auf dem Scheibenfräsersegment 15 sind sowohl Schneideinsätze 16 als Durchmesserschneiden als auch die erfindungsgemäßen Schneideinsätze 14 als Einstichschneiden eingesetzt. Wie insbesondere in Figur 4b zu sehen ist, sind die erfindungsgemäßen Schneideinsätze 14 derart geneigt angeordnet, daß jeweils die nach innen gerichtete Erhöhung hinter der Kontur der Durchmesserschneiden 16 verschwindet. Bei dieser Ausführungsform kommen daher nur die äußeren erhöhten Abschnitte des erfindungsgemäßen Schneideinsatzes 14 mit dem Werkstück in Berührung. Die axiale Neigung beträgt hier etwa 7° . Sowohl den Einstichschneiden als auch den Durchmesserschneiden sind Spankammern zugeordnet, die zur Spanaufnahme dienen und zur verbesserten Spanabfuhr beitragen.

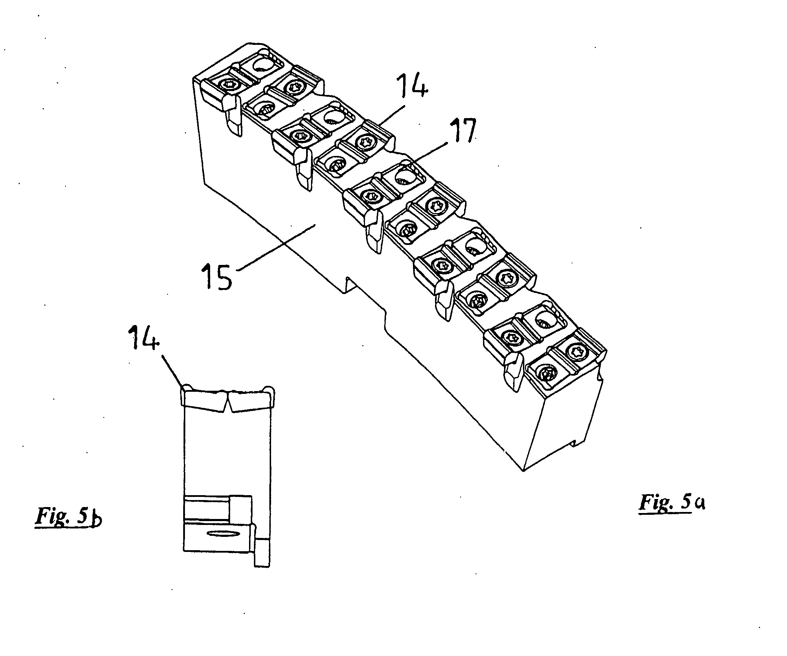

In den Figuren 5a und 5b ist eine alternative Ausführungsform eines Scheibenfräsersegmentes 15 gezeigt. Dieses Scheibenfräsersegment 15 weist keine Durchmesserschneiden 16, sondern nur die erfindungsgemäßen Schneideinsätze 14 auf, die als Einstichschneiden verwendet werden und in Kreuzverzahnung angeordnet sind. Dieser Scheibenfräser wird erst eingesetzt, nachdem mit Hilfe eines anderen Scheibenfräsers der Durchmesser des Hubzapfens gefräst worden ist. Er dient lediglich der Bearbeitung der Anlaufbunde einschließlich des als Schleifauslauf dienenden Einstiches im Übergangsbereich zwischen Lagerzapfen bzw. Hubzapfen und Kurbelwange.

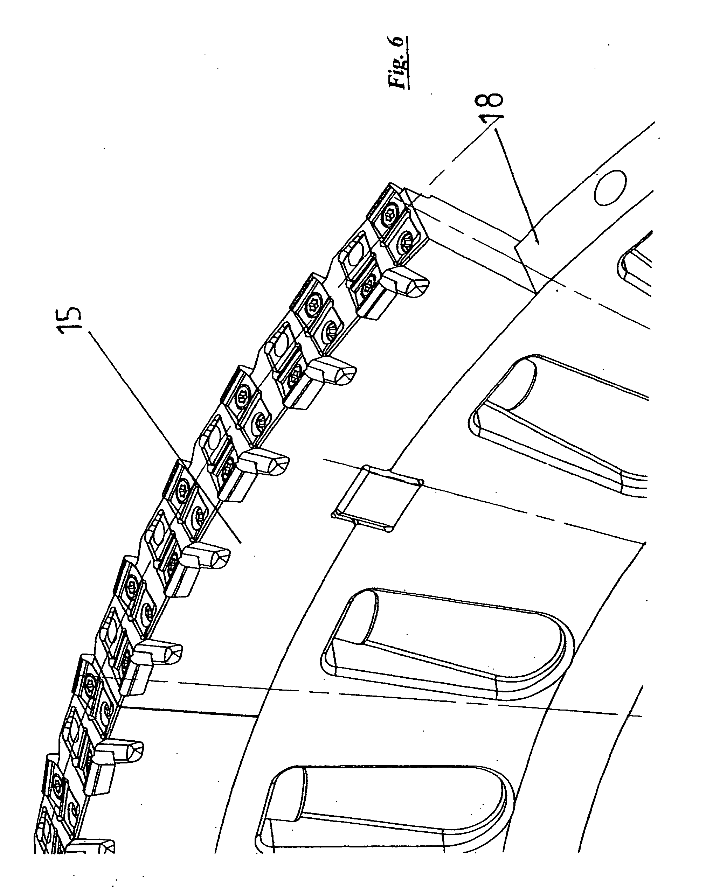

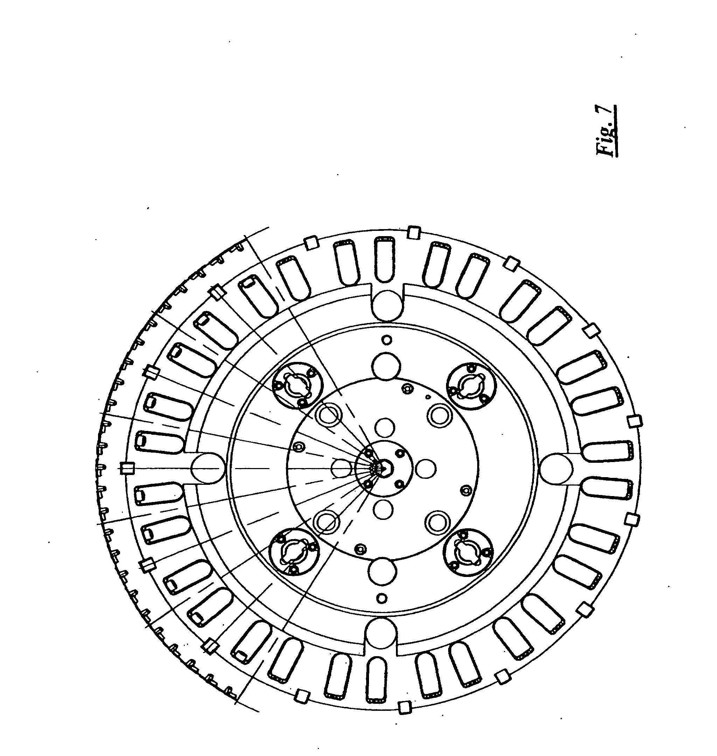

Die gezeigten Scheibenfräsersegmente 15 werden, wie in Figur 6 dargestellt ist, auf der Fräserscheibe 18 montiert. In der gezeigten Ausführungsform wird der Fräser mit fünfzehn Fräsersegmenten, die eine Mehrzahl von Schneideinsätzen tragen, bestückt. Dies wird aus den Figuren 6 und 7 deutlich.

Ebenfalls in den Figuren 4a sowie 5a zu erkennen ist, daß jedem als Einstichschneide dienenden Schneideinsatz 14 eine Einstellvorrichtung 17 zugeordnet ist.

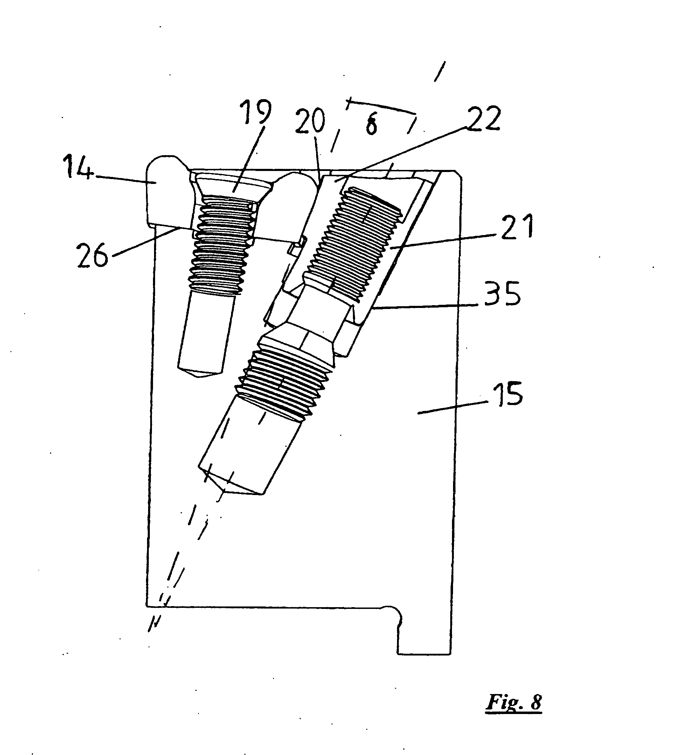

Diese Einstellvorrichtung ist in Figur 8 in einer Schnittansicht vergrößert dargestellt. Der erfindungsgemäße Schneideinsatz 14 ist mit Hilfe einer Befestigungsschraube 19, die durch die Befestigungsbohrung des Schneideinsatzes in eine Gewindebohrung des Scheibenfräsersegmentes 15 eingreift, in dem Sitz 26 des Scheibenfräsersegments 15 befestigt. Die Befestigungsbohrung und die Schraube 19 sowie die entsprechende Gewindebohrung im Fräsersegment sind derart angeordnet, daß die Schneidplatte bei der Montage gegen die Anschlagfläche 20 vorgespannt wird. In diesem montierten Zustand ist aber der Schneideinsatz mittels der Einstellvorrichtung zumindest noch begrenzt in axialer Richtung bewegbar. Die Anschlagfläche 20 ist Teil der Einstellvorrichtung 17, die aus einer Differentialschraube besteht, die einen Keil 22 mit der Anschlagfläche 20 gegen den Schneideinsatz 14 drückt. Der Wirkwinkel δ des Keils 22 beträgt in der gezeigten Ausführungsform 6°.

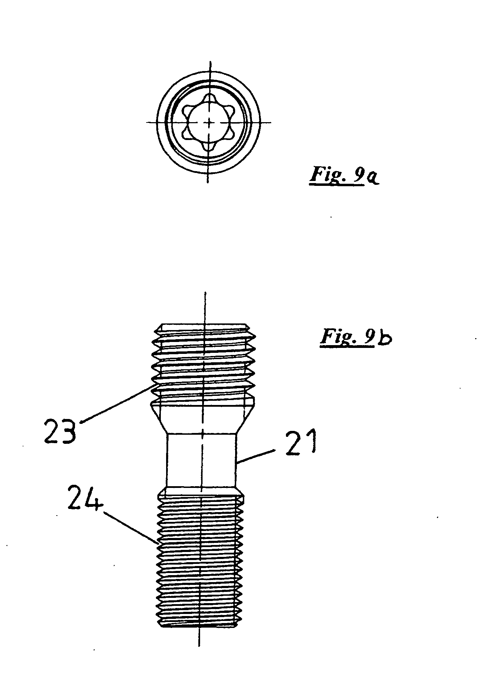

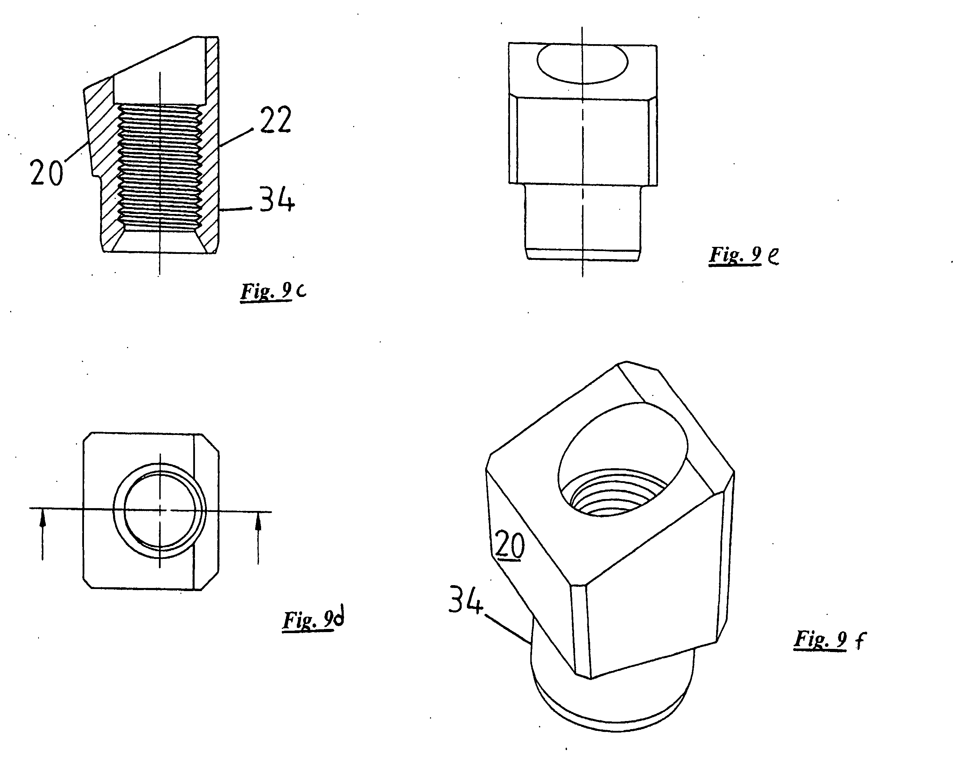

Der genaue Aufbau der Einstellvorrichtung 17 wird anhand der Figuren 9a bis 9f deutlich. Die Figuren 9a und 9b zeigen zwei Ansichten der Differentialschraube 21. In Figur 9a ist ein Torxprofil angezeigt, mit dessen Hilfe die Differentialschraube 21 betätigt werden kann. Anstelle des Torxprofils kann hier jedoch auch jedes andere Profil, wie z. B. ein Innensechskant, verwendet werden. Die Differentialschraube 21 weist zwei rechtsgängige Gewinde 23 und 24 auf. Weiterer Bestandteil der Einstellvorrichtung 17 ist der Keil 22, mit der entsprechend geneigten Anschlagfläche 20. Der Keil 22 ist in den Figuren 9c bis 9f in verschiedenen Ansichten im Schnitt und perspektivisch dargestellt. Er besteht im wesentlichen aus einer Gewindehülse mit äußeren Keilflächen 20.

Der Keil 22 weist an seinem unteren Ende einen zylindrischen Ansatz 34 auf. Dieser Ansatz greift, wie in Figur 8 deutlich zu erkennen ist, in eine Paßbohrung 35 ein, die koaxial oberhalb der Gewindebohrung des Scheibenfräsersegmentes vorgesehen ist. Zylindrischer Ansatz 34 und Paßbohrung 35 sind derart aufeinander abgestimmt, daß der zylindrische Ansatz 34 in der Paßbohrung 35 zwangsgeführt wird. Durch diese Zwangsführung wird sichergestellt, daß der Keil an seiner der Anschlagfläche 20 abgewandten Seite auf einer Führungsfläche des Scheibenfräsersegmentes aufliegt. Das Wechseln der Schneidplatte wird dadurch vereinfacht, da der Keil auch im gelösten Zustand immer eine exakt definierte Position einnimmt.

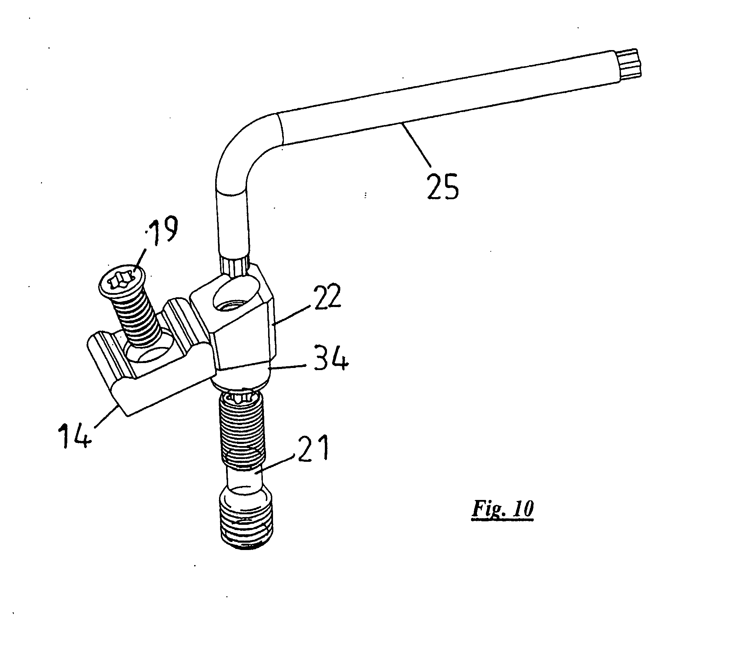

Die Funktionsweise der Einstellvorrichtung ist in der Figur 10 gezeigt. Zunächst wird der Schneideinsatz 14 mit Hilfe der Befestigungsschraube 19 derart an dem Scheibenfräsersegment 15 befestigt, daß die Befestigungsschraube 19 den Schneideinsatz 14 gegen die Anschlagfläche 20 des Teils 22 drückt und die Schneidplatte in axialer Richtung zumindest begrenzt bewegbar ist. Nun wird mit Hilfe des entsprechenden Werkzeuges 25, das in das Torx-Profil der Differentialschraube 21 eingreift, der Keil 22 nach unten gedrückt, wodurch der Schneideinsatz 14 nach außen gedrückt wird. Die begrenzte Bewegbarkeit wird beispielsweise durch die elastischen Eigenschaften der Befestigungsschraube erreicht.
Im vorliegenden Fall beträgt die Steigungsdifferenz zwischen den beiden Gewinden 23, 24 der Differentialschraube 21 0,25 mm. Dies bewirkt, daß bei einer vollen Schraubenumdrehung der Differentialschraube der Stellkeil 22 radial um 0,25 mm versetzt wird und die Wendeschneidplatte axial um 0,025 mm verschoben wird. Bei einer Schlüsseldrehung von 14° erfolgt somit eine axiale Verstellung der Wendeschneidplatte von 0,001 mm. Folglich ist eine Feineinstellung möglich und die Planlauftoleranzen werden durch den erfindungsgemäßen Scheibenfräser deutlich reduziert. Im gezeigten Beispiel konnte die Planlauftoleranz auf weniger als 0,005 mm eingestellt werden.

Diese genaue axiale Positionierung der Schneidplatten garantiert, daß alle Schneidkanten an der Oberflächengestaltung beteiligt sind und äußerst geringe Welligkeiten und Rauhtiefen am Werkstück erzielt werden.

Es versteht sich, daß die erfindungsgemäße Einstellvorrichtung 17 mit Vorteil ebenso mit anderen Schneideinsätzen und anderen Scheibenfräsem verwendet werden kann, die keinen erhöhten Abschnitt bzw. keinen geneigten Sitz aufweisen.

### Bezugszeichenliste

- A, B, C, D: Hauptlager
- 1, 2, 3, 4: Hublager
- 5: Kurbelwelle
- 6: Scheibenfräser
- 7: Durchmesserschneiden
- 8: Einstichschneiden
- 9: mittlerer Kantenabschnitt
- 10, 10', 10", 10''': Schneidkante, erhöhter Abschnitt
- 11: obere Fläche
- 12: untere Fläche
- 13: Nebenschneidkante
- 14: Schneidplatte
- 15: Scheibenfräsersegment
- 16: Durchmesserschneideinsatz
- 17: Einstellvorrichtung
- 18: Fräserscheibe
- 19: Befestigungsschraube
- 20: Anschlagsfläche
- 21: Differentialschraube
- 22: Keil
- 23, 24: Gewinde
- 25: Werkzeug
- 26: Plattensitz
- 27: Anlaufbunde
- 28: zweiter gerader Abschnitt
- 29: Befestigungsbohrung
- 30: Spanfläche
- 31: Höhenlinie
- 32: Symmetrielinie
- 33: Spankammer
- 34: zylindrischer Ansatz
- 35: Passbohrung

## Patentansprüche

1. Schneidplatte (14) für Scheibenfräser, insbesondere für das Fräsen von Kurbelwellen, mit einer oberen und einer unteren Fläche (11, 12) sowie umlaufenden Seitenflächen, welche die oberen und unteren Flächen miteinander verbinden, wobei die obere Fläche (11) mindestens im Bereich zweier Ecken wulstartige Erhöhungen bzw. Vorsprünge (10, 10') aufweist, **dadurch gekennzeichnet, daß** in einer Draufsicht auf eine durch mindestens eine der Seitenflächen gebildete Spanfläche (30) die Kante, welche den Übergang von der oberen Fläche (11) zu der Spanfläche (30) definiert, im Bereich der beiden Enden dieser Kante, jeweils einen gegenüber dem mittleren Kantenabschnitt (9) vorspringenden Abschnitt (10, 10') hat, wobei die erhöhten Abschnitte (10, 10', 28) in Nebenschneidkanten (13) übergehen, die mit der unteren Fläche (12) einen Winkel β einschließen, der größer als 95° ist.

2. Schneidplatte (14) nach Anspruch 1, **dadurch gekennzeichnet, daß** die erhöhten Abschnitte (10, 10', 28) konvex gekrümmt verlaufen, wobei der gekrümmte Abschnitt(10, 10') auch aus geraden, zueinander abgewinkelten Teilstücken bestehen kann, und sich über einen Winkelbereich (α) von mehr als 90°, vorzugsweise über einen Winkelbereich von mehr als 95° und weniger als 120° und besonders bevorzugt von etwa 110° erstrecken.

3. Schneidplatte (14) nach Anspruch 1 oder 2, **dadurch gekennzeichnet, daß** die erhöhten Abschnitte (10, 10') jeweils eine Schneidkante (9, 10, 10', 28) bilden.

4. Schneidplatte nach einem der Ansprüche 1 bis 3, **dadurch gekennzeichnet, daß** die Schneidplatte einen im wesentlichen quaderförmigen Aufbau hat und vier Schneidkanten (9, 10, 10', 28) aufweist.

5. Schneidplatte nach einem der Ansprüche 1 bis 4, **dadurch gekennzeichnet, daß** die beiden erhöhten Abschnitte (10, 10') bezüglich einer senkrecht zur Spanfläche und senkrecht zu der unteren Fläche verlaufenden Ebene spiegelsymmetrisch zueinander sind.

6. Schneidplatte nach einem der Ansprüche 1 bis 5, **dadurch gekennzeichnet, daß** der Winkel β zwischen der Nebenschneidkante (13) und der unteren Fläche (12) größer als 98° und kleiner als 110° ist und besonders bevorzugt etwa 100° beträgt.

7. Scheibenfräser oder Scheibenfräsersegment mit mindestens einem Sitz (26) für die Aufnahme einer tangential am Scheibenfräser oder Scheibenfräsersegment (15) anzuordnenden Schneidplatte (14), **dadurch gekennzeichnet, daß** der Scheibenfräser bzw. das Scheibenfräsersegment mit einer Schneidplatte nach einem der Ansprüche 1 bis 6 ausgestattet ist, wobei die radiale Auflagefläche des Sitzes (26) relativ zur Achse des Scheibenfräsers oder des Scheibenfräsersegments (15) geneigt ist.

8. Scheibenfräser oder Scheibenfräsersegment nach Anspruch 7, **dadurch gekennzeichnet, daß** die radiale Auflagefläche des Sitzes (26) zusätzlich in Umfangsrichtung geneigt ist.

9. Scheibenfräser oder Scheibenfräsersegment nach Anspruch 7 oder 8, **dadurch gekennzeichnet, daß** der axiale Neigungswinkel des Sitzes (26) kleiner als 15°, vorzugsweise zwischen 4 und 10°, besonders bevorzugt zwischen 6 und 8° beträgt.

10. Scheibenfräser oder Scheibenfräsersegment nach einem der Ansprüche 7 bis 9, **dadurch gekennzeichnet, daß** in Umfangsrichtung abwechselnd auf der rechten und der linken Seite der Umfangsfläche ein Plattensitz (26) mit entgegengesetzter Neigungsrichtung vorgesehen ist.

11. Scheibenfräser oder Scheibenfräsersegment nach einem der Ansprüche 7 bis 10, **dadurch gekennzeichnet, daß** zumindest einem Plattensitz (26) eine Einstellvorrichtung (17) für die axiale Ausrichtung einer Schneidplatte (14) auf der Fläche des Plattensitzes (26) zugeordnet ist.

12. Scheibenfräser oder Scheibenfräsersegment nach Anspruch 11, **dadurch gekennzeichnet, daß** die Einstellvorrichtung (17) einen Keil (22) aufweist, der derart angeordnet sind, daß er mit einer in dem Sitz (26) aufgenommenen Schneidplatte (14) in Eingriff tritt und derart bewegbar ist, daß durch die Bewegung des Keiles (22) eine in dem Sitz (26) aufgenommene Schneidplatte (14) in axialer Richtung in dem Sitz (26) verschoben wird.

13. Scheibenfräser oder Scheibenfräsersegment nach Anspruch 12, **dadurch gekennzeichnet, daß** der Keil (22) einen Wirkwinkel δ von weniger als 15°, vorzugsweise von weniger als 10°, besonders bevorzugt zwischen 5 und 8° aufweist.

14. Scheibenfräser oder Scheibenfräsersegment nach einem der Ansprüche 11 bis 13, **dadurch gekennzeichnet, daß** die Einstellvorrichtung (17) eine Differentialschraube (21) aufweist.

15. Scheibenfräser oder Scheibenfräsersegment nach Anspruch 14, **dadurch gekennzeichnet, daß** die Differentialschraube (21) zwei Gewinde (23, 24), vorzugsweise zwei rechtsgängige Gewinde, mit einer Steigungsdifferenz, vorzugsweise kleiner als 1 mm, besonders bevorzugt zwischen 0,1 und 0,4 mm, besitzt.

16. Scheibenfräser oder Scheibenfräsersegment nach einem der Ansprüche 7 bis 15 mit mindestens einer Schneidplatte nach einem der Ansprüche 1 bis 7, **dadurch gekennzeichnet, daß** der Sitz (26) neben einer radialen Anschlagsfläche auch axiale und tangentiale Anschlagflächen aufweist und die Schneidplatte (14) im montierten Zustand zumindest gegen die axiale Anschlagsfläche (20) vorgespannt ist.

17. Scheibenfräser oder Scheibenfräsersegment nach einem der Ansprüche 7 bis 16, **dadurch gekennzeichnet, daß** die Schneidplatte (14) in dem Sitz (26) derart befestigt ist, daß sie mit Hilfe der Einstellvorrichtung (22) in axialer Richtung zumindest begrenzt bewegbar ist.

18. Verwendung eines Scheibenfräsers oder Scheibenfräsersegmentes nach einem der Ansprüche 7 bis 17 zum Fräsen von Lagerzapfen und Kurbelwangen einer Kurbelwelle (5).

## Claims

1. Cutter insert (14) for disc-milling cutters, in particular for milling crankshafts, with an upper and a lower surface (11, 12) and circumferential lateral surfaces which connect the upper and lower surfaces to one another, at least in the region of two corners, the upper surface (11) having raised swellings and/or projections (10, 10'), **characterised in that** in a plan view of a cutting face (30) formed by at least one of the lateral surfaces, the edge which defines the transition from the upper surface (11) to the cutting face (30) has a portion (10, 10') projecting relative to the central edge portion (9) in the region of each of the two ends of this edge, the raised portions (10, 10', 28) forming a transition to minor cutting edges (13) which enclose an angle β with the lower surface (12) which is greater than 95°.

2. Cutter insert (14) according to claim 1, **characterised in that** the raised portions (10, 10', 28) provide a convex curved course, wherein the curved portion (10, 10') can consist of individual straight sections angled relative to one another and extends over an angular range (α) greater than 90°, preferably over an angular range greater than 95° and less than 120° and, particularly preferably, approximately 110°.

3. Cutter insert (14) according to claim 1 or 2, **characterised in that** each of the raised portions (10, 10') forms a cutting edge (9, 10, 10', 28).

4. Cutter insert according to any one of claims 1 to 3, **characterised in that** the cutter insert has a substantially cuboid structure and provides four cutting edges (9, 10, 10', 28).

5. Cutter insert according to any one of claims 1 to 4, **characterised in that** the two raised portions (10, 10') are in mirror-image symmetry to one another with reference to a plane running perpendicular to the cutting face and perpendicular to the lower surface.

6. Cutter insert according to one of claims 1 to 5, **characterised in that** the angle β between the minor cutting edges (13) and the lower surface (12) is greater than 98° and less than 110° and is particularly preferably approximately 100°.

7. Disc-milling cutter or disc-milling segment with at least one seat (26) for accommodating a cutter insert (14) to be arranged in a tangential manner on the disc-milling cutter or disc-milling segment (15), **characterised in that** the disc-milling cutter or disc-milling segment is provided with a cutter insert according to one of claims 1 to 6, the radial support surface of the seat (26) being inclined relative to the axis of the disc-milling cutter or the disc-milling segment (15).

8. Disc-milling cutter or disc-milling segment according to claim 7, **characterised in that** the radial support surface of the seat (26) is additionally inclined in the direction of the circumference.

9. Disc-milling cutter or disc-milling segment according to claim 7 or 8, **characterised in that** the axial angle of inclination of the seat (26) is less than 15°, preferably between 4 and 10°, particularly preferably between 6 and 8°.

10. Disc-milling cutter or disc-milling segment according to one of claims 7 to 9, **characterised in that** cutter-insert seats (26) with the opposite direction of inclination in the circumferential direction are provided alternately on the right and left sides of the circumferential surface.

11. Disc-milling cutter or disc-milling segment according to one of claims 7 to 10, **characterised in that** an adjustment device (17) for the axial alignment of the cutter insert (14) on the surface of the cutter-insert seat (26) is arranged on at least one cutter-insert seat (26).

12. Disc-milling cutter or disc-milling segment according to claim 11, **characterised in that the** adjustment device (17) provides a wedge (22), which is arranged in such a manner that it engages with a cutter insert (14) accommodated in the seat (26) and can be moved in such a manner that through the movement of the wedge (22), a cutter insert (14) accommodated in the seat (26) is displaced in the axial direction in the seat (26).

13. Disc-milling cutter or disc-milling segment according to claim 12, **characterised in that** the wedge (22) has a working angle δ of less than 15°, preferably less than 10°, and particularly preferably between 5 and 8°.

14. Disc-milling cutter or disc-milling segment according to any one of claims 11 to 13, **characterised in that** the adjustment device (17) has a differential screw (21).

15. Disc-milling cutter or disc-milling segment according to claim 14, **characterised in that** the differential screw (21) has two threads (23, 24), preferably two clockwise threads, with a pitch difference preferably less than 1 mm, particularly preferably, between 0.1 and 0.4 mm.

16. Disc-milling cutter or disc-milling segment according to any one of claims 7 to 15 with at least one cutter insert according to any one of claims 1 to 7, **characterised in that** the seat (26) also has axial and tangential stopping faces in addition to a radial stopping face, and that in the assembled condition, the cutter insert (14) is pre-tensioned at least against the axial stopping face (20).

17. Disc-milling cutter or disc-milling segment according to any one of claims 7 to 16, **characterised in that** the cutter insert (14) is attached in the seat (26) in such a manner that, with the assistance of the adjustment device (22), it can be moved in the axial direction at least to a limited extent.

18. Use of a disc-milling cutter or disc-milling segment according to one of claims 7 to 17 for milling bearing necks and crank webs of a crankshaft (5).

## Revendications

1. Plaquette de coupe (14) pour fraise à disque, en particulier pour le fraisage d'arbres à cames, comportant une face supérieure et une face inférieure (11, 12) ainsi que des faces latérales périphériques qui relient les faces supérieure et inférieure, la face supérieure (11) comportant au moins dans la région de deux coins des surélévations ou saillies (10, 10') en forme de bourrelet, **caractérisée en ce que**, en vue de dessus d'une face de coupe (30) formée par au moins l'une des faces latérales, l'arête qui définit la transition de la face supérieure (11) à la face de coupe (30) comporte dans la région des deux coins de cette arête une portion (10, 10') qui fait saillie par rapport à la portion d'arête médiane (9), les portions surélevées (10, 10', 28) se transformant en arêtes de coupe secondaires (13) qui forment avec la face inférieure (12) un angle β qui est supérieur à 95°.

2. Plaquette de coupe (14) selon la revendication 1, **caractérisée en ce que** les portions surélevées (10, 10', 28) ont une courbure convexe, la portion incurvée (10, 10') pouvant également être constituée de parties droites faisant un angle, et s'étendant sur une plage angulaire (α) de plus de 90°, avantageusement sur une plage angulaire de plus de 95° et de moins de 120° et de façon particulièrement préférée égale à 110° environ.

3. Plaquette de coupe (14) selon la revendication 1 ou 2, **caractérisée en ce que** les portions surélevées (10, 10') forment chacune une arête de coupe (9, 10, 10', 28).

4. Plaquette de coupe selon l'une des revendications 1 à 3, **caractérisée en ce que** la plaquette de coupe a une structure sensiblement parallélépipédique et comporte quatre arêtes de coupe (9, 10, 10', 28).

5. Plaquette de coupe selon l'une des revendications 1 à 4, **caractérisée en ce que** les deux portions surélevées (10, 10') sont en symétrie de miroir par rapport à un plan s'étendant perpendiculairement à la face de coupe et perpendiculairement à la face inférieure.

6. Plaquette de coupe selon l'une des revendications 1 à 5, **caractérisée en ce que** l'angle β entre l'arête de coupe secondaire (13) et la face inférieure (12) est supérieur à 98° et inférieur à 110° et de façon particulièrement préférée égal à 100° environ.

7. Fraise à disque ou segment de fraise à disque comportant au moins un siège (26) destiné à recevoir une plaquette de coupe (14) placée tangentiellement sur la fraise à disque ou le segment de fraise à disque (15), **caractérisé en ce que** la fraise à disque ou le segment de fraise à disque est doté d'une plaquette de coupe selon l'une des revendications 1 à 6, la face d'appui radiale du siège (26) étant inclinée par rapport à l'axe de la fraise à disque ou du segment de fraise à disque (15).

8. Fraise à disque ou segment de fraise à disque selon la revendication 7, **caractérisé en ce que** la face d'appui radiale du siège (26) est en plus inclinée dans la direction périphérique.

9. Fraise à disque ou segment de fraise à disque selon la revendication 7 ou 8, **caractérisé en ce que** l'angle d'inclinaison axiale du siège (26) est inférieur à 15°, avantageusement compris entre 4 et 10°, et de façon particulièrement préférée entre 6 et 8°.

10. Fraise à disque ou segment de fraise à disque selon l'une des revendications 7 à 9, **caractérisé en ce qu'**un siège de plaquette (26) présentant une direction d'inclinaison opposée est prévue dans la direction périphérique altemativement sur le côté gauche et le côté droit de la face périphérique.

11. Fraise à disque ou segment de fraise à disque selon l'une des revendications 7 à 10, **caractérisé en ce qu'**un dispositif de réglage (17) destiné à l'orientation axiale d'une plaquette de coupe (14) sur la face du siège de plaquette (26) est associé à au moins un siège de plaquette (26).

12. Fraise à disque ou segment de fraise à disque selon la revendication 11, **caractérisé en ce que** le dispositif de réglage (17) comporte une clavette (22) qui est disposée de façon à venir en engagement avec une plaquette de coupe (14) reçue dans le siège (26) et à être mobile de sorte qu'une plaquette de coupe (14), reçue dans le siège (26) est déplacée dans une direction axiale dans le siège (26) par le déplacement de la clavette (22).

13. Fraise à disque ou segment de fraise à disque selon la revendication 12, **caractérisé en ce que** la clavette (22) présente un angle actif δ inférieur à 15°, avantageusement inférieur à 10°, et de façon particulièrement préférée compris entre 5 et 8°.

14. Fraise à disque ou segment de fraise à disque selon la revendication 11 à 13, **caractérisé en ce que** le dispositif de réglage (17) comporte une vis différentielle (21).

15. Fraise à disque ou segment de fraise à disque selon la revendication 14, **caractérisé en ce que** la vis différentielle (21) comporte deux filetages (23, 24), avantageusement deux filetages à droite, avec une différence de pas, avantageusement inférieure à 1 mm, de façon particulièrement préférée comprise entre 0,1 et 0,4 mm.

16. Fraise à disque ou segment de fraise à disque selon l'une des revendications 7 à 15 comportant au moins une plaquette de coupe selon l'une des revendications 1 à 7, **caractérisé en ce que** le siège (26) comporte également, en plus d'une face de butée radiale, des faces de butée axiales et tangentielles et la plaquette de coupe (14) est précontrainte à l'état monté au moins contre la face de butée axiale (20).

17. Fraise à disque au segment de fraises à disque selon l'une des revendications 7 à 16, **caractérisé en ce que** la plaquette de coupe (14) est fixée dans le siège (26) de façon à pouvoir se déplacer, au mois de façon limitée, dans une direction axiale à l'aide d'un dispositif de réglage (22).

18. Utilisation d'une fraise à disque ou d'un segment de fraise à disque selon l'une des revendications 7 à 17 pour le fraisage de tourillons et de flasques de manivelle d'un arbre à cames (5).
